(19) Europäisches Patentamt
European Patent Office
Office européen des brevets

(11) Veröffentlichungsnummer: **0 005 771**
**A1**

(12) # EUROPÄISCHE PATENTANMELDUNG

(21) Anmeldenummer: **79101520.9**

(22) Anmeldetag: **18.05.79**

(51) Int. Cl.[2]: **C 09 D 5/16**
B 05 D 5/00, C 08 L 63/00

(30) Priorität: **30.05.78 US 910256**

(43) Veröffentlichungstag der Anmeldung:
**12.12.79 Patentblatt 79/25**

(84) Benannte Vertragsstaaten:
**DE FR GB IT**

(71) Anmelder: **CIBA-GEIGY AG**
**Patentabteilung Postfach**
**CH-4002 Basel(CH)**

(72) Erfinder: **Weiss, Jonas, Dr.**
**Meadowlark Road**
**Portchester New York 10573(US)**

(54) **Verfahren zur Verbesserung der Wirkung von Antifoulingfarben und dabei verwendete Lackschicht.**

(57) Die Erfindung betrifft ein Verfahren zur Verbesserung der Wirkung von Antifoulingfarben durch eine gezielte Einstellung der Austrittsgeschwindigkeit der Giftstoffe aus der Farbe. Das wird durch Aufbringen einer Deckschicht aus einem bestimmten Epoxidharzsystem erreicht. Dieses System ist beim Auftragen unvollständig vernetzt und härtet nach dem Auftragen langsam endgültig. Die Antifouling-Wirkung wird erstaunlich lange voll erhalten.

EP 0 005 771 A1

Croydon Printing Company Ltd.

0005771



CIBA-GEIGY AG
Basel (Schweiz)

3-11734/CGC 863/+

Verfahren zur Verbesserung der Wirkung von Antifoulingfarben und dabei verwendete Lackschicht

Die Erfindung betrifft ein Verfahren für die Anwendung einer in Wasser quellbaren Epoxidharzbeschichtung zum Zwecke des kontrollierten Aussickerns eines Giftstoffes aus einer Meeres-Antifoulingfarbe.

In dem US-Patent 3 575 123 wird eine hydrophile Acrylatbeschichtung beschrieben, welche Antifoulingmittel und Pigmente enthält. Diese pigmentierte Beschichtung bewirkt sowohl den Antifoulingeffekt als auch eine Herabsetzung des Reibungswiderstandes.

In dem US-Patent 3 896 753 wird eine Meeres-Antifoulingbeschichtung aus Acrylat-, Vinyl-und Urethanpolymeren beschrieben, welche ebenfalls den Antifoulingeffekt und den Reibungswiderstand von Marineanlagen verbessert.

Das BE-Patent 846 293 offenbart den Gebrauch einer Acrylatdeckschicht auf einer Antifoulingfarbe zum Schutze der Farbe vor UV-Licht-Abbau. Die Deckschicht führt dagegen nicht zu einer Steigerung des Antifoulingeffektes.

In dem GB-Patent 1 409 048 wird eine hydrophile Polyurethandeckschicht beschrieben, welche die Antifoulingwirkung dadurch verbessert, dass die Aussickergeschwindigkeit der Gifte kontrolliert wird.

Gegenstand der vorliegenden Erfindung ist ein Verfahren zur Verbesserung der Wirkung von Antifoulingfarben durch gezielte Einstellung der Aussickergeschwindigkeit der Giftstoffe durch Aufbringen einer Deckschicht aus einem unvollständig vernetzten Kunstharzsystem auf die Oberfläche der Antifoulingfarbe, wobei die Deckschicht nach der Aufbringung bei Umgebungstemperatur endgültig aushärtet, welches dadurch gekennzeichnet ist, dass man als Kunstharzsystem für die Deckschicht eine solche Kunstharzmischung (E) einsetzt, welche

a) eine in Wasser lösliche oder dispergierbare Diglycidylverbindung der Formel I

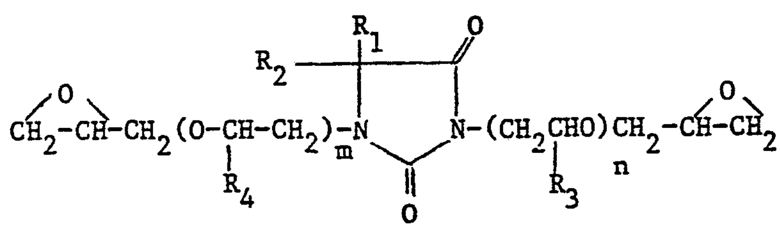

(I),

in der $R_1$ und $R_2$ unabhängig voneinander einen Alkylrest mit 1 bis 4 C-Atomen, $R_3$ und $R_4$ unabhängig voneinander Wasserstoff oder einen Alkylrest mit 1 bis 2 C-Atomen und n und m unabhängig voneinander eine Zahl von 0 bis 4, bedeuten, und

b) ein in Wasser dispergierbares Polyamido-amin enthält, wobei auf 1 Epoxidäquivalent 0,8 bis 1,2 Aminäquivalente kommen.

Die Alkylreste in Formel I umfassen geradkettige und verzweigte Gruppen, so beispielsweise Methyl, Aethyl, Propyl, Isopropyl, Butyl und Isobutyl. Bevorzugt ist $R_1$ Methyl, $R_2$ Methyl oder Aethyl, $R_3$ und $R_4$ Wasserstoff oder Methyl, n 0 oder 1 und m 0.

Besonders bevorzugte Hydantoinverbindungen sind N,N'-Diglycidyl-5,5-dimethylhydantoin ($R_1$ und $R_2$ sind Methyl, n und m sind 0), N,N'-Diglycidyl-5-äthyl-5-methylhydantoin ($R_1$ = Methyl, $R_2$ = Aethyl, n und m sind 0), N-Glycidyl-N'-(oxypropyl-glycidyl)-5,5-dimethylhydantoin ($R_1$ und $R_2$ sind Methyl, n = 0, $R_3$ = Methyl, m = 0) und Mischungen dieser Verbindungen.

Bevorzugte Polyamido-amine, welche gemäss der Erfindung zur Anwendung kommen, umfassen die Kondensationsprodukte von polymerisierten Fettsäuren mit einem Ueberschuss eines Polyamins in einem solchen Mengenverhältnis, dass die Kondensationsprodukte Amin-Werte zwischen 250 und 400 (mg KOH/g) aufweisen.

Beispiele für solche polymerisierten Fettsäuren sind die bekannten Handelsprodukte Empol "Dimer"- und "Trimer"-Säuren, welche durch Polymerisation von ungesättigten $C_{18}$-Fettsäuren hergestellt werden. Zu diesen ungesättigten Fettsäuren gehören monofunktionelle, so wie z.B. Oelsäure, Recinolsäure, Petroselinsäure, Vaccensäure, Linolsäure, Limonensäure, Eläostearinsäure, Punicinsäure, Licansäure und Parinarsäure.

Die Polyamine, welche gemäss der Erfindung für die Kondensation mit den polymerisierten Fettsäuren verwendet werden, können aliphatische, cycloaliphatische oder heterocyclische primäre und sekundäre Amine sein. Beispiele für solche Polyamine sind aliphatische, wie Diäthylentriamin, Triäthylentetramin, N-(2-Hydroxyäthyl)-, N-(2-Hydroxypropyl)- und N-(2-Cyanoäthyl)diäthylentriamin, Tetraäthylenpentamin, Aethylendiamin, 1,2-Diaminopropan, 1,3-Diaminopropan, 2,2,4- und 2,3,3-Trimethylhexamethylendiamin, Hexamethylendiamin, N,N-Dimethylpropylendiamin, N,N-Diäthylpropylendiamin; cycloaliphatische Amine, wie Bis-(4-aminocyclohexyl)methan, Bis(4-amino-3-methylcyclohexyl)methan, 2,2-Bis(4-aminocyclohexyl)propan und 3-Aminomethyl-3,5,5-trimethylcyclohexylamin; und heterocyclische Amine wie N-Aminoäthylpiperazin.

Besonders bevorzugte Polyamido-amine sind ein Härter für Epoxidharze von mittlerem Molekulargewicht, niedriger Viskosität und sehr hohem Amingehalt, welcher durch Kondensation von polymerisierten Fettsäuren und ausgewählten Polyaminen hergestellt wird, und Hexagon Enterprises' CASAMID 360®, welches eine 50%-ige Lösung eines reaktiven Polyamido-amins in Wasser ist. Das zuerst genannte Polyamidoamin wird hier als "Härter Z" bezeichnet.

Ausser der Hydantoinverbindung und dem Polyamido-amin kann das bei Umgebungstemperatur härtende System auch noch einen verflüchtigenden Reaktionsinhibitor, einen Epoxy-Amin-Beschleuniger, ein hydrophiles Lösungsmittel, Netzmittel, Fliesskontrolladditive und Verdickungsmittel enthalten.

Bevorzugte verflüchtigende Reaktionsinhibitoren sind niedermolekulare Alkanone mit einer Verflüchtigungsgeschwindigkeit, welche gleich oder grösser als die von Wasser ist. Besonders bevorzugte Alkanone sind 2-Propanon und 2-Butanon. Der verdampfbare Reaktionsinhibitor hat einen zeitlich begrenzten Inhibierungseffekt, welcher nach Trocknung der Beschichtung schwindet.

Die Epoxy-Amin-Beschleuniger gemäss der Erfindung umfassen primäre aliphatische Polyamine oder tertiäre Amine, Phenole, Amide und Sulfonamide, Hydroxyamine und Verbindungen, welche mehr als eine der funktionellen Gruppen der genannten Verbindungen enthalten. Beispiele für solche primären aliphatischen Polyamine sind geradkettige und verzweigte, wie z.B. Aethylendiamin, Propylendiamin, Hexamethylendiamin, Aethylenglycol-bis-propylamin, Diäthylen-glycol-bis-propylamin, Diäthylentriamin, Imino-bis-propylamin, Bis(hexamethylen)triamin, Triäthylentriamin, Tetraäthylenpentamin, Pentaäthylenhexamin, 1,2-Diaminopropan, 1,2-Diamino-2-methylpropan, 1,2-Diaminobutan, 2,2,4- und 2,3,3-Trimethylhexamethylendiamin; alicyclische Polyamine wie z.B. Methandiamin, 1,3- und 1,4-Diaminocyclohexan, N-Aminoäthylpiperazin, Isophorondiamin, Bis(4-aminocyclohexyl)methan, Bis(4-amino-3-methylcyclohexyl)methan und 2,3-Bis(aminocyclohexyl)propan. Beispiele für tertiäre Amine sind Benzyldimethylamin, Triäthylamin, Tripropylamin, Tributylamin, N-Methylmorpholin, 1,4-Diazabicyclo(2,2,2)octan und Hexamethylentetramin. Beispiele für solche Phenole sind Phenol, Hydrochinon, Resorcinol, Phloroglucinol, 1,5- und 1,6-Naphthalindiol, Bisphenol-A, Bisphenol-F, 1,3-Bis(p-hydroxycumyl)-benzol und Phenolharze. Beispiele für solche Amide und Sulfonamide sind Acetamid, Harnstoff, Salicamid, Benzolsulfonamid, Toluolsulfonamid und N-Aethyl-o- und -p-Toluolsulfonamid. Beispiele für solche Hydroxyamine sind Diäthanolamin, Triäthylanolamin, Tris(hydroxymethyl)aminomethan, o- und p-Aminophenol, m-Diäthylaminophenol und Dimethylaminophenol.

Der Epoxy-Amin-Beschleuniger kann bis 10 Gew.% des härtbaren Epoxidharzsystems ausmachen. Diese Konzentration ist besonders dann bevorzugt, wenn die Kunstharzmischung (E) gleichzeitig einen verdampfbaren Alkanon-Reaktionsinhibitor enthält. Der bevorzugte Beschleuniger ist der Jefferson Accelerator 398®, eine Mischung von Hydroxyaminen wie oben angeführt.

Das gemäss der Erfindung verwendete hydrophile Lösungsmittel hat eine Verdampfbarkeit, welche geringer als die von Wasser ist. Es können Glykoläther oder Alkohole sein. Beispiele für derartige Glykoläther sind 2-Methoxyäthanol, 2-Butyoxyäthanol, 2-Aethoxyäthanol, 3-Aethoxy-1-propanol, 3-Methyl-1-butanol, 2-(2-Butoxyäthoxy)äthanol, 2-(2-Aethoxy-äthoxy-äthanol, 2-Aethoxyäthyläther, 2-(2-Methoxyäthoxy)-äthanol, Diäthylenglycol-dimethyläther, Triäthylenglycoldimethyl-äther und Tetraäthylenglycol-dimethyl-äther. Beispiele für derartige geradkettige und verzweigte aliphatische Alkohole sind 2-Methyl-1-butanol, 3-Methyl-1-butanol, 3-Methyl-2-butanol, 1-Pentanol, 2-Methyl-2-pentanol, 2-Methyl-3-pentanol, 3-Methyl-2-pentanol, 3-Methyl-3-pentanol, 4-Methyl-1-pentanol, 4-Methyl-2-pentanol, 1-Hexanol, 2-Methyl-2-hexanol und 2-Methyl-3-hexanol, alicyclische Alkohole wie Cyclohexanol, 1,2- und 1,3- und 1,4-Cyclohexandiol, Cyclopentanol,

1,3-Cyclopentandiol, 1-Cyclopentyläthanol, 3-Cyclopentyl-1-propanol, Cyclohexylmethanol, Cyclohexyl-1-äthanol und Cycloheptanol.

Das hydrophile Lösungsmittel kann bis zu 20 Vol.-%, bezogen auf alle verdampfbaren Stoffe des härtbaren Systems, im letzteren enthalten sein.

Schutzkolloide, Verdickungsmittel und Netzmittel sind nützlich für die Stabilisierung der wässrigen Dispersionen und für die Bildung von gleichmässigen Filmen beim Trocknen. Beispiele hierfür sind Kieselsäure, Carboxymethylcellulose, Polyvinylalkohol und die nicht ionischen oberflächenaktiven Substanzen Foamster NS-1® der Diamond Shamrock und Surfinol 104® (Tetramethyl decynediol von Air Products).

Die bei Umgebungstemperatur härtenden Systeme haben in Form von Dispersionen ein "pot-life" bis zu 4 Stunden. Deckschichten, welche unter Verwendung solcher Dispersionen hergestellt werden, werden bei Umgebungstemperatur innerhalb von 24 Stunden klebfrei und härten in dieser Zeit. Innerhalb einer Woche ist die Härtung vollkommen. Die Schichten zeigen gute Wasser- und Lösungsmittelbeständigkeit, gute Haftung, Flexibilität und gute Schlag- und Wetterfestigkeit. Die vernetzten Deckschichten zeigen guten Widerstand bei langzeitigem Eintauchen in aromatische Lösungsmittel, Gasolin, Ketone, wässrige Salzlösungen, wässriges Ammoniak und wässrige Salzsäure. Die Wasseraufnahme beträgt 30 bis 100%, bezogen auf das Trockengewicht.

Die Beschichtung kann auf den Oberflächen von Anstrichen handelsüblicher Antifoulingfarben angebracht werden. Bevorzugt sind solche Antifoulingfarben, welche Zinn enthaltende Giftstoffe aufweisen. Die Gifte diffundieren aus der Antifoulingfarbe durch die durch Wasser gequollene, gehärtete Epoxidharzschicht, bevor sie von der Oberfläche weggespült werden. Der Giftverlust ist dadurch begrenzt und einheitlicher (und gezielt steuerbar) im Gegensatz zu unbehandelten bekannten

Farboberflächen. Bei einem Giftaustritt angemessener Geschwindigkeit, welcher durch das erfindungsgemässe Verfahren hervorgerufen wird, wird ein Aktivitätsgrad erzielt, welcher gross genug ist, um Verschmutzen (fouling) durch Muscheln, Algen, Polypen und andere Foulingorganismen zu verhindern, wobei die Wirkungszeit viel länger als bei einer bekannten unbehandelten Farbe ist.

Gemäss der Erfindung können z.B. die folgenden Antifoulingfarben als Grundierung verwendet werden, auf die die in Wasser quellbaren Epoxidharzbeschichtungen aufgebracht werden:

Antifoulingfarbe A; - 13,8% Tributylzinn-fluorid in einem Vinylharzträger

Antifoulingfarbe B; - 6,9% Bis-(tributylzinn)-oxid in einem Vinylträger

Antifoulingfarbe C; - 11,7% Tributylzinn-fluorid in einem Vinyl/Gummi-Harz-Träger.

Die Erfindung wird in den folgenden Beispielen näher erläutert. Darin bedeuten Teile, wenn nicht ausdrücklich anders angegeben, Gewichtsteile.

## Beispiele

### A) Herstellung von bei Umgebungstemperatur härtbaren Epoxidharzsystemen

### Formulierung I

Zu 29,1 Gewichtsteilen Polyamido-amin (50% reaktiv in wässriger Dispersion) der Handelsbezeichnung Casamid 360® werden unter starkem Rühren bei Raumtemperatur 35,6 Gewichtsteile Wasser gegeben. Die so erhaltene Härtungsmittel-Dispersion wird unter Rühren von Hand zu einer Mischung aus 25,4 Teilen einer Hydantoinverbindungsmischung (70 Gew.-% N,N'-Diglycidyl-5,5-dimethylhydantoin und 30 Gew.-% N-Glycidyl-N'-(oxypropyl-glycidyl)-5,5-dimethylhydantoin) und 9,9 Teilen verdampfbarer Reaktionsinhibitor (Aceton) gegeben. Die erhaltene Mischung wird als Formulierung I bezeichnet.

Auf ähnliche Weise lassen sich auch andere bei Umgebungstemperatur härtbare Epoxidharzsysteme herstellen, wenn die Hydantoinverbindungen der Formulierung I durch folgende Glycidylverbindungen ausgetauscht werden:

N,N'-Diglycidyl-5,5-dimethylhydantoin,
N,N'-Diglycidyl-5-äthyl-5-methylhydantoin,
N,N'-Diglycidyl-5-butyl-5-methylhydantoin,
N-Glycidyl-N'-(oxypropyl-glycidyl)-5,5-dimethylhydantoin,
N-Glycidyl-N'-(oxyäthyl-glycidyl)-5,5-dimethylhydantoin und
N-Glycidyl-N'-(oxypropyl-glycidyl)-5-äthyl-5-methylhydantoin.

### Formulierung II

Zu 42 Teilen Wasser werden unter starkem Rühren bei 55°C 10,5 Teile des Polyamido-amins "Härter Z" gegeben. Zu der entstandenen Härtungsmittel-Dispersion werden 0,21 Teile des Epoxy-Amin-Beschleunigers Jefferson Accelerator 398® gegeben. Die so erhaltene Härterkomposition wird mit 10,5 Teilen einer Hydantoinverbindungsmischung (70% N,N'-Diglycidyl-5,5-dimethylhydantoin und 30% N-Glycidyl-N'-(oxypropyl-glycidyl)-5,5-dimethylhydantoin), 31,5 Teilen verdampfbaren

Reaktionsinhibitor (Aceton) und 5,3 Teilen hydrophiles Lösungsmittel (Bis-(2-methoxyäthyl)-äther von Hand vermischt. Es liegt die Formulierung II vor.

Auf ähnliche Weise lassen sich auch andere bei Umgebungstemperatur härtbare Epoxidharzsysteme herstellen, wenn die Hydantoinverbindungen der Formulierung II durch folgende Glycidylverbindungen ausgetauscht werden:

N,N'-Diglycidyl-5,5-dimethylhydantoin,
N,N'-Diglycidyl-5-äthyl-5-methylhydantoin,
N,N'-Diglycidyl-5-butyl-5-methylhydantoin,
N-Glycidyl-N'-(oxypropyl-glycidyl)-5,5-dimethylhydantoin,
N-Glycidyl-N'-(oxyäthyl-glycidyl)-5,5,-dimethylhydantoin und
N-Glycidyl-N'-(oxypropyl-glycidyl)-5-äthyl-5-methylhydantoin.

Nachstehend sind physikalische Eigenschaften des Härters Z und des Casamids 360® angegeben.

| | Härter Z | Casamid 360 |
|---|---|---|
| Aminzahl (mg KOH/g) | 350-400 | 140-180 (280-360)[a] |
| Viskosität (Gardner-Holt) | $Z_2$-$Z_4$ (40°C) | |
| (Brookfield) | | 20-40 Pa s (25°C) |
| Farbe, Gardener (Max.) | 12 | 15 |
| Spez. Gewicht | 0,971 $kg/m^3$ (25°C) | 1,050 $kg/m^3$ (20°C) |

B) Aufbringen von Grundierung und Deckschicht und Antifoulingversuche

Auf eine gesandstrahlte und gereinigte glasfaserarmierte Polyesterplatte werden jeweils beidseitig mittels eines Pinsels die Antifoulingfarben aufgebracht. Nach 3 Tagen Trocknung werden dann mittels einer Spritzpistole jeweils die bei Umgebungstemperatur härtenden Systeme (Formulierungen I und II) aufgetragen. Es werden trockene Filme von 25,4 µm Stärke erhalten. Nach der Vernetzung weist die Deckschicht

der Formulierung I eine Wasseraufnahme von 35%, bezogen auf das Trockengewicht, und eine Wasserverdampfdurchlässigkeit von 0,160 g.cm/24 h $m^2$ mm Hg auf. Bei der Deckschicht der Formulierung II betragen die analogen Werte 32% und 0,118 g.cm/24 h · $m^2$ · mm Hg.

Die so beschichteten Versuchsplatten werden 8 Monate lang dem Meerwasser bei Florida (Tauchung) ausgesetzt. Monatlich wird auf Verschmutzung und Ansatz (Fouling) und insbesondere auf den Befall von Muscheln geprüft. Das Verhalten der erfindungsgemäss behandelten Platten wird mit solchen Platten verglichen, welche lediglich die Antifouling-Grundfarbe, nicht dagegen die Deckschicht enthalten. Die Versuchswerte sind in der nachstehenden Tabelle zusammengestellt.

Tabelle

| Anti-fouling-farbe | Deck-schicht-Formu-lierung No. | Gefundene Werte nach: 1 Monat* Kein Fouling % | 1 Monat* Anzahl Mu-scheln | 2 Monaten* Kein Fouling % | 2 Monaten* Anzahl Mu-scheln | 3 Monaten* Kein Fouling % | 3 Monaten* Anzahl Mu-scheln | 4 Monaten* Kein Fouling % | 4 Monaten* Anzahl Mu-scheln | 5 Monaten* Kein Fouling % | 5 Monaten* Anzahl Mu-scheln | 6 Monaten* Kein Fouling % | 6 Monaten* Anzahl Mu-scheln |
|---|---|---|---|---|---|---|---|---|---|---|---|---|---|
| A | keine | 100 | 0 | 94 | 0 | 25 | 64 | 0 | >100 | 0 | >100 | 0 | >100 |
| A | I | 92 | 0 | 88 | 4 | 22 | 53 | 17 | 53 | 10 | 60 | 12 | 61 |
| A | II | 85 | 0 | 78 | 0 | 75 | 0 | 73 | 0 | 73 | 0 | 60 | 16 |
| B | keine | 92 | 0 | 34 | 58 | 0 | >100 | 0 | >100 | - | - | - | - |
| B | I | 91 | 0 | 68 | 25 | 0 | >100 | 0 | >100 | - | - | - | - |
| B | II | 91 | 0 | 84 | 8 | 8 | 100 | 0 | >100 | - | - | - | - |
| C | keine | 100 | 0 | 91 | 2 | 23 | 46 | 24 | 59 | 1 | 83 | 0 | >100 |
| C | I | 88 | 0 | 83 | 0 | 55 | 18 | 47 | 19 | 47 | 19 | 45 | 20 |
| C | II | 78 | 0 | 70 | 0 | 78 | 0 | 60 | 0 | 58 | 0 | 40 | 10 |

* Durchschnittswerte beider Seiten

Tabelle (Fortsetzung)

| Antifoulingfarbe | Deckschicht-Formulierung No. | Gefundene Werte nach 7 Monaten* Kein Fouling % | 7 Monaten* Anzahl Muscheln | 8 Monaten* Kein Fouling % | 8 Monaten* Anzahl Muscheln |
|---|---|---|---|---|---|
| A | keine | 0 | >100 | 0 | >100 |
| A | I | 17 | 53 | 43 | 35 |
| A | II | 43 | 25 | 48 | 40 |
| B | keine | - | - | - | - |
| B | I | - | - | - | - |
| B | II | - | - | - | - |
| C | keine | 0 | >100 | 0 | >100 |
| C | I | 54 | 20 | 55 | 15 |
| C | II | 60 | 18 | 66 | 20 |

* Durchschnittswerte beider Seiten

Patentansprüche

1. Verfahren zur Verbesserung der Wirkung von Antifoulingfarben durch gezielte Einstellung der Aussickergeschwindigkeit der Giftstoffe durch Aufbringen einer Deckschicht aus einem unvollständig vernetzten Kunstharzsystem auf die Oberfläche der Antifoulingfarbe, wobei die Deckschicht nach der Aufbringung bei Umgebungstemperatur endgültig aushärtet, dadurch gekennzeichnet, dass man als Kunstharzsystem für die Deckschicht eine solche Kunstharzmischung (E) einsetzt, welche

a) eine in Wasser lösliche oder dispergierbare Diglycidylverbindung der Formel I

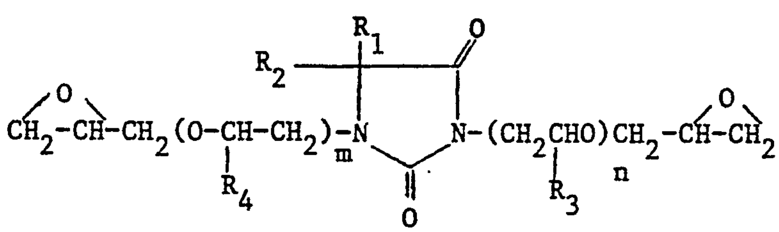

(I),

in der $R_1$ und $R_2$ unabhängig voneinander einen Alkylrest mit 1 bis 4 C-Atomen, $R_3$ und $R_4$ unabhängig voneinander Wasserstoff oder einen Alkylrest mit 1 bis 2 C-Atomen und n und m unabhängig voneinander eine Zahl von 0 bis 4, bedeuten, und

b) ein in Wasser dispergierbares Polyamido-amin enthält, wobei auf 1 Epoxidäquivalent 0,8 bis 1,2 Aminäquivalente kommen.

2. Verfahren nach Anspruch 1, dadurch gekennzeichnet, dass man eine solche Kunstharzmischung (E) einsetzt, welche als Polyamido-amin ein Kondensationsprodukt einer polymerisierten Fettsäure mit einem Ueberschuss an Polyamin enthält, wobei die Aminzahl des Polyamido-amins 250 bis 400 (mg KOH/g) beträgt.

3. Verfahren nach Anspruch 1, dadurch gekennzeichnet, dass man eine solche Kunstharzmischung (E) einsetzt, welche zusätzlich einen

verdampfbaren Alkanon-Reaktionsinhibitor enthält, dessen Verdampfbarkeit gleich oder grösser als die von Wasser ist.

4. Verfahren nach Anspruch 1, dadurch gekennzeichnet, dass man eine solche Kunstharzmischung (E) einsetzt, welche als Diglycidylverbindung der Formel I eine solche aus der Gruppe N,N'-Diglycidyl-5,5-dimethylhydantoin, N,N'-Diglycidyl-5-äthyl-5-methyl-hydantoin, N-Glycidyl-N'-(oxypropyl-glycidyl)-5,5-dimethyl-hydantoin oder eine Mischung mehrerer dieser Verbindungen enthält.

5. Verfahren nach Anspruch 3, dadurch gekennzeichnet, dass man eine solche Kunstharzmischung (E) einsetzt, welche zusätzlich einen Epoxy-Amin-Beschleuniger in einer Konzentration von bis zu 10 Gew.-%, bezogen auf die Hydantoinverbindungen, enthält.

6. Verfahren nach Anspruch 1, dadurch gekennzeichnet, dass man eine solche Kunstharzmischung (E) einsetzt, welche zusätzlich ein hydrophiles Lösungsmittel mit einer Flüchtigkeit, die geringer als die von Wasser ist, in einer Konzentration bis zu 20 Vol.-%, bezogen auf alle verdampfbaren Stoffe in der Kunstharzmischung, enthält.

7. Verfahren nach Anspruch 1, dadurch gekennzeichnet, dass man eine solche Kunstharzmischung (E) einsetzt, die letztlich zu einer vernetzten Deckschicht führt, deren Wasseraufnahme 30 bis 100 Gew.%, bezogen auf das Trockengewicht, beträgt.

8. Eine auf Antifoulingfarbanstrichen angebrachte, bei Umgebungstemperatur gehärtete Deckschicht aus einer Kunstharzmischung (E) gemäss Anspruch 1.

0005771

Nummer der Anmeldung

EP 79 10 1520

Europäisches Patentamt

# EUROPÄISCHER RECHERCHENBERICHT

| EINSCHLÄGIGE DOKUMENTE | | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | |
| DA | GB - A - 1 409 048 (INT. PATENT CO)<br>* Anspruch 1 *<br>-- | 1 | C 09 D 5/16<br>B 05 D 5/00<br>C 08 L 63/00 |
| A | DE - A - 1 951 762 (USS ENG. A CONS)<br>* Ansprüche 1,7 *<br>---- | 1 | |
| | | | RECHERCHIERTE SACHGEBIETE (Int. Cl.³) |
| | | | C 09 D 5/16<br>B 05 D 5/00<br>C 09 D 3/58<br>C 08 L 63/00 |
| | | | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |
| b | Der vorliegende Recherchenbericht wurde für alle Patentansprüche erstellt. | | |

| Recherchenort | Abschlußdatum der Recherche | Prüfer |
|---|---|---|
| Den Haag | 05-09-1979 | DE ROECK |

EPA form 1503.1 06.78